(19) **Europäisches Patentamt / European Patent Office / Office européen des brevets**

(11) **EP 1 734 778 B1**

(12) **EUROPEAN PATENT SPECIFICATION**

(45) Date of publication and mention
of the grant of the patent:
**08.10.2008 Bulletin 2008/41**

(51) Int Cl.:
***H04Q 7/38*** (2006.01)

(21) Application number: **06011861.9**

(22) Date of filing: **08.06.2006**

(54) **System and method for proportional fair scheduling**

System und Verfahren zur gerechten proportionalen Verteilung

Système et procédé pour l'ordonnancement équitable proportionnel

(84) Designated Contracting States:
**DE FR GB IT SE**

(30) Priority: **16.06.2005 KR 20050051969**

(43) Date of publication of application:
**20.12.2006 Bulletin 2006/51**

(73) Proprietor: **Samsung Electronics Co., Ltd.**
**Yeongtong-gu**
**Suwon-si, Gyeonggi-do (KR)**

(72) Inventors:
- **Kim, Hoon**
  **Yeongtong-gu,**
  **Suwon-si,**
  **Gyeonggi-do (KR)**
- **Park, Seung-Young**
  **Yeongtong-gu,**
  **Suwon-si,**
  **Gyeonggi-do (KR)**
- **Yun, Sang-Boh**
  **Yeongtong-gu,**
  **Suwon-si,**
  **Gyeonggi-do (KR)**

(74) Representative: **Grünecker, Kinkeldey,**
**Stockmair & Schwanhäusser**
**Anwaltssozietät**
**Leopoldstrasse 4**
**80802 München (DE)**

(56) References cited:
- **LIN YANG, MOHAMED-SLIM ALOUINI, DAVID GESBERT: "Further Results on Selective Multiuser Diversity" INTERNATIONAL WORKSHOP ON MODELING ANALYSIS AND SIMULATION OF WIRELESS AND MOBILE SYSTEMS, [Online] 4 October 2004 (2004-10-04), XP002398784 Venezia, Italy Retrieved from the Internet: URL:http://portal.acm.org> [retrieved on 2006-09-12]**
- **GESBERT D ET AL: "How much feedback is multi-user diversity really worth?" COMMUNICATIONS, 2004 IEEE INTERNATIONAL CONFERENCE ON PARIS, FRANCE 20-24 JUNE 2004, PISCATAWAY, NJ, USA,IEEE, 20 June 2004 (2004-06-20), pages 234-238, XP010709995 ISBN: 0-7803-8533-0**
- **GESBERT D ET AL: "Selective multi-user diversity" SIGNAL PROCESSING AND INFORMATION TECHNOLOGY, 2003. ISSPIT 2003. PROCEEDINGS OF THE 3RD IEEE INTERNATIONAL SYMPOSIUM ON DARMSTADT, GERMANY 14-17 DEC. 2003, PISCATAWAY, NJ, USA,IEEE, 14 December 2003 (2003-12-14), pages 162-165, XP010729119 ISBN: 0-7803-8292-7**
- **VEGARD HASSEL, DAVID GESBERT, MOHAMED-SLIM ALOUINI, GEIR E. OIEN: "A Threshold-Based Feedback Algorithm for Exploiting Multiuser Diversity" IEEE TRANS. ON WIRELESS COMMUNICATIONS, [Online] 12 January 2006 (2006-01-12), XP002398837 Retrieved from the Internet: URL:http://www.eurecom.fr/~gesbert/papers/ > [retrieved on 2006-09-12]**

**Description**

**BACKGROUND OF THE INVENTION**

1. Field of the Invention

The present invention relates to a system and a method for proportionally fair scheduling, and more particularly to a system and a method for proportionally fair scheduling for efficiently exchanging information between a base station and a mobile station in a wireless communication system.

2. Description of the Related Art

A proportionally fair (PF) scheduling scheme is based on information such as a presently available data rate for each user and an average data rate during a late predetermined interval for each user. Equation (1) shows a scheduling metric (SM) used for a PF scheduler.

$$j = \arg\max \frac{r_i}{R_i}, \quad i = 1, 2, \ldots \qquad \ldots (1)$$

Herein, $i$ denotes a user index, $r_i$ denotes a present possible data rate, $R_i$ denotes an average data rate during a late predetermined interval, and e $j$ is a user index selected by a scheduler. In other words, the PF scheduler selects a user having the greatest value among values obtained by dividing a present possible data rate by an average data rate during a predetermined interval at every scheduling time point. The $r_i$ is transmitted through a feedback channel (Channel Quality Information (CQI) Channel) received from a user.
Through this conventional scheduling scheme, a user having the highest priority is selected by using CQI of all users at every time point. Accordingly, when many users perform communication, power loss, overheads, and an amount of interference increase due to the CQI.

Lin Yang et al.: "Further Results on Selective Multiuser Diversity" Int. Workshop on Modeling Analysis and Simulation of Wireless and Mobile Systems, 4 October 2004, XP002398784, discloses determining an optimal threshold by a feedback load and determining the number of the feedback users by comparing parameters determined according to the SNIR for each user with the threshold.

**SUMMARY OF THE INVENTION**

It is an object of the present invention to provide a system and a method for proportionally fair scheduling, which performs data scheduling by dynamically controlling the number of users performing transmission of feedback information.

This object is solved by a system and a method with the features of claim 1 or claim 5, respectively.

Advantageous embodiments of the invention are disclosed by the subclaims.

**BRIEF DESCRIPTION OF THE DRAWINGS**

The above and other objects, features and advantages of the present invention will be more apparent from the following detailed description taken in conjunction with the accompanying drawings, in which:

FIG. 1 is a block diagram illustrating the structure of a system for proportionally fair (PF) scheduling according to the present invention;
FIG. 2 is a flowchart illustrating a procedure in which a base station controls $SM_{th}$ which is information for determining CQI feedback transmission according to the present invention;
FIG. 3 is a flowchart illustrating a procedure of determining if a mobile station feedback-transmits CQI according to the present invention;
FIG. 4 is a graph illustrating a simulation result of the present invention in view of the performance of a user;
FIG. 5 is a graph illustrating a probability that a user does not feedback transmit CQI as a simulation result of the present invention;
FIG. 6 is a graph illustrating a probability that a user feedback-transmits CQI according to the number of users as a simulation result of the present invention; and
FIG. 7 is a graph illustrating the performance of a sector according to the number of users as a simulation result of the present invention.

**DETAILED DESCRIPTION OF THE PREFERRED EMBODIMENT**

Hereinafter, a preferred embodiment of the present invention will be described in detail with reference to the accompanying drawings. Note that the same or similar components in drawings are designated by the same reference numerals as far as possible although they are shown in different drawings. In the following description of the present invention, a detailed description of known functions and configurations incorporated herein will be omitted when it may make the subject matter of the present invention unclear.

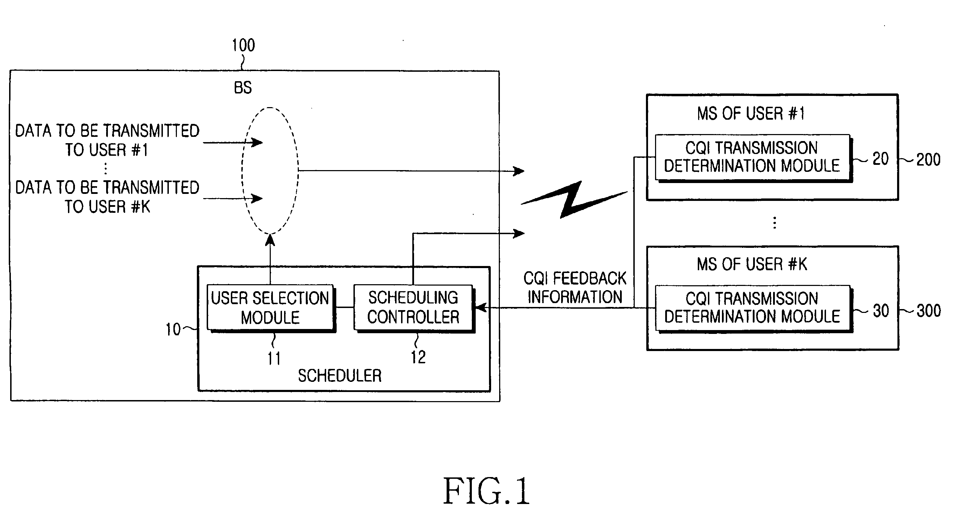

FIG. 1 is a block diagram illustrating the structure of a system for proportionally fair (PF) scheduling according to the present invention.

A scheduler 10 of a base station 100 uses channel quality information (CQI) fedback-transmitted from users in order to perform scheduling with respect to data to be transmitted to the users. In this case, the scheduler 10 can sufficiently perform scheduling using only the CQI of several users instead of the CQI of all users. Accordingly, the scheduler 10 determines the number of CQI to be received therein and transmits information $SM_{th}$ for determining CQI feedback transmission of users according to the determined number to the users, thereby controlling the number of CQI to be received in the scheduler 10.

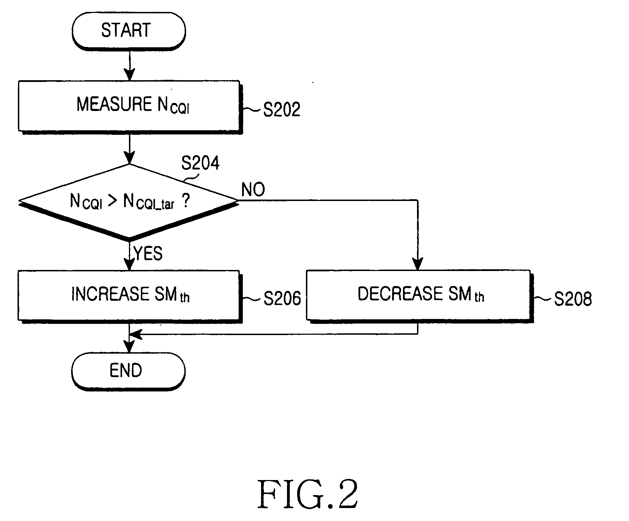

In more detail, the scheduler 10 includes a user selection module 11 and a scheduling controller 12. The user selection module 11 selects users, who receive data at every scheduling time point using CQI of the users received through the scheduling controller 12 and allows the data (which are transmitted to the selected users) to be transmitted through an antenna. The scheduling controller 12 controls information $SM_{th}$ for determining CQI feedback transmission of users through a procedure shown in FIG. 2 by receiving all pieces of CQI fedback-transmitted from users.

Referring to FIG. 2, upon receiving CQI from users, the scheduling controller 12 measures the number $N_{CQI}$ of users having actually fedback-transmitted the CQI in step S202. The $N_{CQI}$ of users having actually fedback-transmitted the CQI is measured by counting only CQI which is received in the scheduling controller 12 and has a signal-to-interference ratio exceeding a predetermined threshold value.

The scheduling controller 12 determines if the measured $N_{CQI}$ is greater than $N_{CQI\_tar}$ required by the scheduling controller 12 in step S204. $N_{CQI\_tar}$ is the number of users who feedback-transmit CQI, required by the scheduling controller 12. That is, the scheduling controller 12 compares the required number of users who feedback-transmit CQI with the number of users who have actually fedback-transmitted CQI.

If the number $N_{CQI}$ of users having actually fedback-transmitted CQI is greater than the required number $N_{CQI\_tar}$ of users who feedback-transmit CQI as the comparison result, the scheduling controller 12 increases information $SM_{th}$ for determining CQI feedback transmission of users in step S206. If $N_{CQI}$ is not greater than $N_{CQI\_tar}$, the scheduler controller 12 decreases $SM_{th}$ in step 208. $SM_{th}$ in the first stage is set as a properly low value in preparation for a case where the number of users performing CQI feedback transmission becomes too low. In addition, $SM_{th}$ in the first stage is determined after the scheduler controller 12 requests all pieces of CQI from all users and determines $SM_i$ values of the users. Hereinafter, $SM_{th}$ is adjusted through the above-described procedure shown in FIG. 2.

In other words, the scheduling controller 12 determines the number of CQI required for scheduling and then increases the value of $SM_{th}$ if the number of actually received CQI is greater than the required number of the CQI, thereby reducing the number of CQI to be received If the number of actually received CQI is less than the required number of CQI, the scheduling controller 12 decreases the value of the $SM_{th}$, thereby increasing the number of CQI to be received.

In the meantime, as shown in FIG. 1, mobile stations 200 and 300 of users, which have received the information $SM_{th}$ for determining CQI feedback transmission of users from the scheduling controller 12, determine if they transmit CQI.

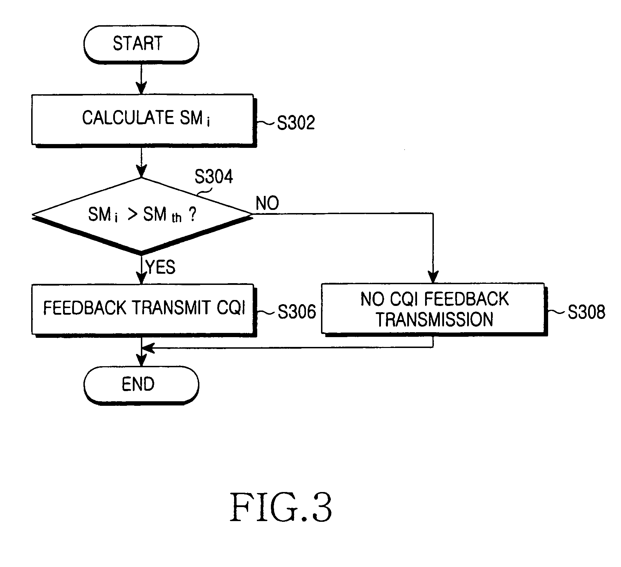

In more detail, the mobile stations 200 and 300 include CQI transmission determination modules 20 and 30, respectively The CQI determination modules 20 and 30 determine if they feedback-transmit CQI through the procedure shown in FIG. 3 using the information $SM_{th}$ for determining CQI feedback transmission of users.

Refering to FIG. 3, if the CQI transmission determination modules 20 and 30 receive the information $SM_{th}$ for determining CQI feedback transmission of users, they calculate their own scheduling metric values, $SM_i$ ($i = 1, ..., K$), in step S302. In other words, a corresponding mobile station calculates the scheduling metric value $SM_i$ ($i = 1, ..., K$) with respect to an $i^{th}$ ($i = 1, ..., K$) user . To this end, according to the present invention, the CQI transmission determination modules 20 and 30 of the mobile stations 200 and 300 have functions capable of calculating the scheduling metric value.

The $SM_i$ is defined as $r_i/R_i$ in Equation 1 of proportionally fair scheduling. The mobile stations 200 and 300 calculate a present possible data rate $r_i$ by measuring link quality of a downlink pilot symbol and a data error rate. $R_i$ denotes an average data rate during a predetermined interval of a downlink and can be measured by calculating an amount of data actually received in the mobile stations 200 and 300.

In addition, each of the CQI transmission determination modules 20 and 30 determines if its own scheduling metric values $SM_i$ is greater than the information $SM_{th}$ for determining CQI feedback transmission of users in step S304.

If the scheduling metric value $SM_i$ is greater than the information $SM_{th}$ for determining CQI feedback transmission of users, the CQI transmission determination modules 20 and 30 transmit CQI to a base station in step S306. If the scheduling metric value $SM_i$ is not greater than $SM_{th}$, the CQI transmission determination modules 20 and 30 do not transmit CQI to the base station in step S308.

As described above, according to the present invention, it is possible to allow only a mobile station having a scheduling metric value exceeding a scheduling metric value required by a base station to feedback-transmit CQI in a wireless communication system including a mobile station and a base station capable of calculating each scheduling metric value. In addition, the base station adjusts the scheduling metric value by counting the number of received CQI, thereby controlling the number of CQI transmitted from the mobile station.

Hereinafter, a method for controlling the information $SM_{th}$ for determining CQI feedback transmission of users will be described in more detail.

The information $SM_{th}$ for determining CQI feedback transmission of users corresponds to a scheduling metric value used for ensuring a probability that the number $N_{CQI}$ of users having actually fedback-transmitted CQI is less than the number $N_{CQI\_tar}$ of users, who feedback-transmit CQI, required by the scheduling controller 12 at every scheduling time point. In other words, this is expressed as Equation (2).

$$P(N_{CQI} < N_{CQI\_tar}) = \delta \qquad \ldots(2)$$

Herein, $\delta$ is a probability that $N_{CQI} < N_{CQI\_tar}$.

In this case, on the assumption that a minimum of a variation step size (used for decreasing the information $SM_{th}$ for determining CQI feedback transmission of users) is $\Delta$, the value of $SM_{th}$ is decreased or increased by Equation (3) through steps S206 and S208.

$$SM_{th}(n) = \begin{cases} SM_{th}(n-1) + \dfrac{\delta}{(1-\delta)}\Delta, & if\ N_{CQI} > N_{CQI\_tar} \\ SM_{th}(n-1) - \Delta, & elsewhere \end{cases} \qquad \ldots(3)$$

In other words, $SM_{th}$ is decreased or increased by multiplying a previous value thereof by a predetermined variation step size.

In addition, it can be understood that the value of $SM_{th}$ is repeatedly increased and decreased, so the value thereof is convergent to zero as shown in Equation (4).

$$P(N_{CQI} \geq N_{CQI\_tar})\frac{\delta}{1-\delta}\Delta + P(N_{CQI} < N_{CQI\_tar})(-\Delta)$$

$$= (1-\delta)\frac{\delta}{1-\delta}\Delta + \delta(-\Delta) \qquad \ldots(4)$$

$$= 0$$

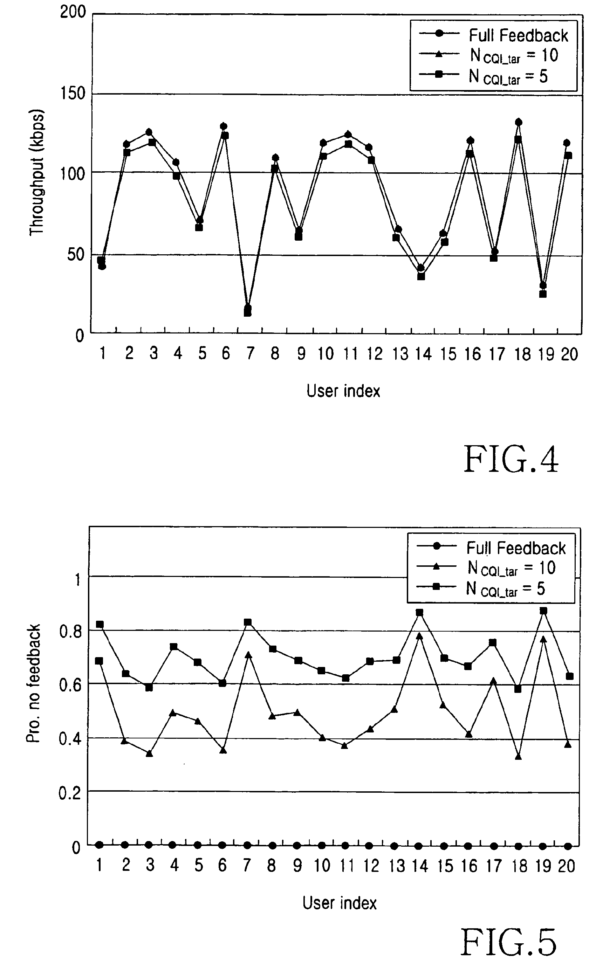

If a simulation is performed with respect to the present invention as described above in an environment having a signal to noise ratio and a data rate shown in Table 2 using parameters shown in Table 1, the result of the simulation is shown in FIGs. 4 to 7.

Table 1

| Parameter | Value |
|---|---|
| Number of cells | 19 (3-sector) |
| Target system | HDR |
| Slot duration | 10msec |
| User distribution | Uniform |
| Path loss model | 128 + 37.6 log10(R) |

(continued)

| Parameter | Value |
|---|---|
| Shadowing | Std: 8Db |
| Fading | Ped. A, 3km/h |
| CQI report | No feedback error |

Table 2

| SNR (dB) | Data Rate (kbps) |
|---|---|
| -12.5 | 38.4 |
| -9.5 | 76.8 |
| -8.5 | 102.6 |
| -6.5 | 153.6 |
| -5.7 | 204.8 |
| -4.0 | 307.2 |
| -1.0 | 614.4 |
| 1.3 | 921.6 |
| 3.0 | 1228.8 |
| 7.2 | 1848.2 |
| 9.5 | 2457.6 |

FIGs. 4 and 5 are graphs illustrating the performance (throughput) of users and a probability that the users do not feedback-transmit CQI when the number of users is 20, $\Delta = 0.25$, and $\delta = 0.5$. As shown in FIG. 4, although none of users feedback-transmit CQI, the performance is not much different from that of the conventional technique. As shown in FIG. 5, in full feedback, the probability that users do not feedback-transmit CQI is equal to zero. In addition, the smaller the value of $N_{CQI\_tar}$, the higher the probability that users do not feedback-transmit CQI .

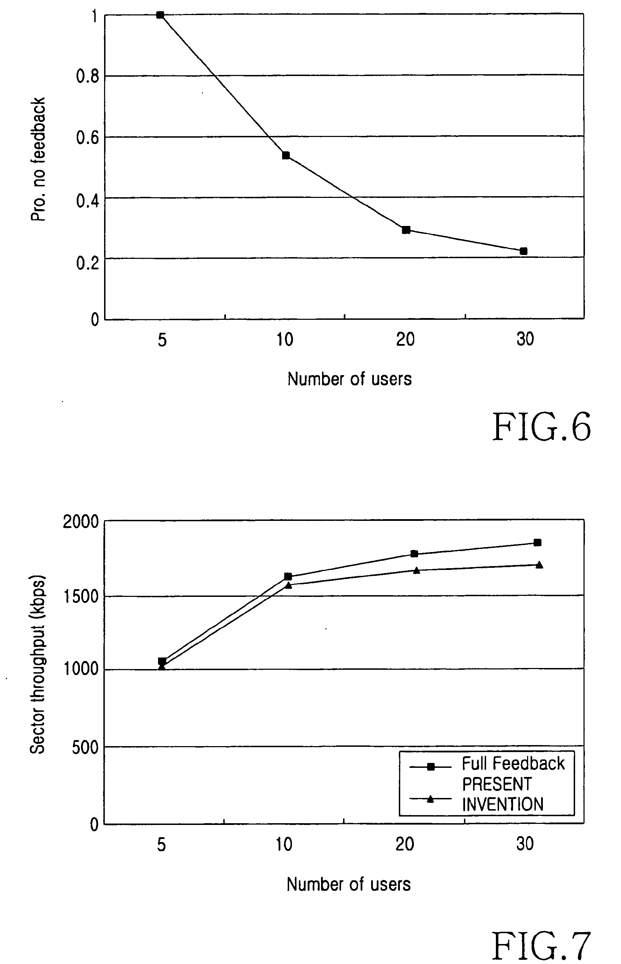

FIGs. 6 and 7 are graphs illustrating a probability that a user feedback-transmits CQI and the performance of a sector according to the number of users when the number $N_{CQI\_tar}$ of users, who feedback-transmit CQI, required by the scheduling controller 12 is 5, $\Delta = 0.25$, and $\delta = 0.5$. As shown in FIG. 6, since $N_{CQI\_tar}$ is 5, the probability that a user feedback-transmits CQI is 1 when the number of users is 5. As shown in FIG. 7, although the number of users increases, the performance of the sector is not much different from that of the conventional technique.

As described above, according to the present invention, if a base station transmits a threshold value of a scheduling metric value to a mobile station, the mobile station feedback-transmits its own CQI only when its own scheduling metric value exceeds the threshold value, thereby reducing overhead required in scheduling. Accordingly, it is possible to provide a service using low power.

In addition, the present invention is adaptable for a scheduling scheme of requesting the feedback transmission of information from a mobile station.

Furthermore, according to the present invention, it is possible to effectively transmit/receive information usable for scheduling while maintaining system performance similar to that of the conventional technique.

While the invention has been shown and described with reference to certain preferred embodiments thereof, it will be understood by those skilled in the art that various changes in form and details may be made therein without departing from the scope of the invention. Consequently, the scope of the invention should not be limited to the embodiments, but should be defined by the appended claims.

## Claims

1. A system for performing proportionally fair, PF, scheduling, including a base station (100) performing the PF scheduling for data transmission by receiving channel quality information, CQI, fedback-transmitted from plural mobile stations (200,300) connected to the base station, the system **characterized by**:

the base station (100) adapted to determine a number of $N_{CQI, tar}$ first mobile stations feeding back the CQI required by the base station, to calculate a number of $N_{CQI}$ second mobile stations, which have actually fedback-transmitted CQI, using the CQI received from the plural mobile stations, to control a first scheduling metric value by comparing (S204) the number of the first mobile stations with the number of the second mobile stations, and to transmit the controlled first scheduling metric value to the plural mobile stations, the first scheduling metric value corresponding to information used for determining if the plural mobile stations feedback-transmit the CQI; and

the plural mobile stations (200,300) adapted to determine if the mobile stations feedback-transmit the CQI by comparing the first scheduling metric value $SM_{th}$ received from the base station with second scheduling metric values $SM_i$ of the plural mobile stations.

2. The system as claimed in claim 1, wherein the base station (100) is adapted to calculate the number of the second mobile stations (200,300) by counting only CQI having a signal-to-interference ratio exceeding a predetermined threshold value, which is received from the plural mobile stations.

3. The system as claimed in claim 1, wherein the base station (100) is adapted to control the first scheduling metric value by decreasing the first scheduling metric value if the number of the first mobile stations is greater than the number of the second mobile stations and increasing the first scheduling metric value if the number of the first mobile stations is less than the number of the second mobile stations.

4. The system as claimed in claim 1, wherein the mobile station (200,300) is adapted to not feedback-transmit the CQI to the base station if the first scheduling metric value is greater than the second scheduling metric value and feedback-transmits the CQI to the base station if the first scheduling metric value is less than the second scheduling metric value.

5. A method for performing proportionally fair, PF, scheduling in a system, including a base station (100) performing PF scheduling for data transmission by receiving channel quality information, CQI, fedback-transmitted from plural mobile stations (200,300) connected to the base station, the method **characterized by** the steps of: determining by the base station a number of $N_{CQI\ tar}$ first mobile stations which feedback-transmit the CQI required by the base station

calculating by the base station (S202) a number of $N_{CQI}$ second mobile stations having actually fedback-transmitted CQI using CQI received from the plural mobile stations;
controlling by the base station (100) a first scheduling metric value by comparing (S204) the number of the first mobile stations with a number of the second mobile stations, the first scheduling metric value corresponding to information used for determining if the plural mobile stations feedback-transmit the CQI;
transmitting by the base station (100) the first scheduling metric value to the plural mobile stations; and
determining by the mobile station (200,300) if the CQI is fedback-transmitted by comparing the first scheduling metric value $SM_{th}$ received from the base station with a second scheduling metric value $SM_i$ of the mobile station.

6. The method as claimed in claim 5, wherein, in the step of calculating a number of the first mobile stations, the number of the first mobile stations is calculated by counting only CQI having a signal-to-interference ratio exceeding a predetermined threshold value, which is received from the plural mobile stations.

7. The method as claimed in claim 5, wherein the step of controlling the first scheduling metric value comprises:

increasing (S206) the first scheduling metric value if the number of the first mobile stations is greater than the number the second mobile stations; and
decreasing (S208) the first scheduling metric value if the number of the first mobile stations is less than the number the second mobile stations.

8. The method as claimed in claim 5, wherein the step of determining if the CQI is fedback-transmitted comprises:

omitting (S308) feedback transmission with respect to the CQI if the first scheduling metric value is greater than the second scheduling metric value; and
feedback-transmitting (S306) the CQI if the first scheduling metric value is less than the second scheduling metric value.

**Patentansprüche**

1. System zum Durchführen einer PF-Koordinierung (proportionally fair PF), beinhaltend eine Basisstation (100) zum Durchführen der PF-Koordinierung für eine Datensendung durch Empfangen von Kanalgüteinformation CQI (channel quality information CQI), die von mit der Basisstation verbundenen mehreren Mobilstationen (200, 300) per Rückkopplung gesendet wird, wobei das System **dadurch gekennzeichnet ist, dass**:

   die Basisstation (100) dafür ausgelegt ist, eine Anzahl von $N_{CQI\,tar}$ ersten Mobilstationen, die die von der Basisstation benötigte Kanalgüteinformation rückkoppeln, zu bestimmen, eine Anzahl von $N_{CQI}$ zweiten Mobilstationen, die Kanalgüteinformation aktuell per Rückkopplung gesendet haben, unter Verwendung der von den mehreren Mobilstationen empfangenen Kanalgüteinformation zu berechnen, einen ersten Koordinierungsmetrikwert durch Vergleichen (S204) der Anzahl der ersten Mobilstationen mit der Anzahl der zweiten Mobilstationen zu steuern und den gesteuerten ersten Koordinierungsmetrikwert an die mehreren Mobilstationen zu senden, wobei der erste Koordinierungsmetrikwert Information entspricht, die verwendet wird, um zu bestimmen, ob die mehreren Mobilstationen die Kanalgüteinformation per Rückkopplung senden; und
   die mehreren Mobilstationen (200, 300) dafür ausgelegt sind, durch Vergleichen des von der Basisstation empfangenen ersten Koordinierungsmetrikwertes $SM_{th}$ mit den zweiten Koordinierungsmetrikwerten $SM_i$ der mehreren Mobilstationen zu bestimmen, ob die Mobilstationen die Kanalgüteinformation per Rückkopplung senden.

2. System nach Anspruch 1, wobei die Basisstation (100) dafür ausgelegt ist, die Anzahl der zweiten Mobilstationen (200, 300) durch Zählen nur derjenigen von den mehreren Mobilstationen empfangenen Kanalgüteinformation zu berechnen, die ein Signal-Rausch-Verhältnis oberhalb eines bestimmten Schwellenwertes aufweist.

3. System nach Anspruch 1, wobei die Basisstation (100) dafür ausgelegt ist, den ersten Koordinierungsmetrikwert durch Absenken des ersten Koordinierungsmetrikwertes, wenn die Anzahl der ersten Mobilstationen größer als die Anzahl der zweiten Mobilstationen ist, und Anheben des ersten Koordinierungsmetrikwertes, wenn die Anzahl der ersten Mobilstationen kleiner als die Anzahl der zweiten Mobilstationen ist, zu steuern.

4. System nach Anspruch 1, wobei die Mobilstation (200, 300) dafür ausgelegt ist, die Kanalgüteinformation nicht per Rückkopplung an die Basisstation zu senden, wenn der erste Koordinierungsmetrikwert größer als der zweite Koordinierungsmetrikwert ist, und die Kanalgüteinformation an die Basisstation per Rückkopplung sendet, wenn der erste Koordinierungsmetrikwert kleiner als der zweite Koordinierungsmetrikwert ist.

5. Verfahren zum Durchführen einer PF-Koordinierung (proportionally fair PF) in einem System, beinhaltend eine Basisstation (100) zum Durchführen einer PF-Koordinierung für eine Datensendung durch Empfangen von Kanalgüteinformation CQI (channel quality information CQI), die von mit der Basisstation verbundenen mehreren Mobilstationen (200, 300) per Rückkopplung gesendet wird, wobei das Verfahren die nachfolgenden Schritte umfasst:

   durch die Basisstation erfolgendes Bestimmen einer Anzahl von $N_{CQI\,tar}$ ersten Mobilstationen, die die von der Basisstation benötigte Kanalgüteinformation per Rückkopplung senden;
   durch die Basisstation erfolgendes Berechnen (S202) einer Anzahl von $N_{CQI}$ zweiten Mobilstationen, die Kanalgüteinformation aktuell per Rückkopplung gesendet haben, unter Verwendung von von den mehreren Mobilstationen empfangener Kanalgüteinformation; und
   durch die Basisstation (100) erfolgendes Steuern eines ersten Koordinierungsmetrikwertes durch Vergleichen (204) der Anzahl der ersten Mobilstationen mit einer Anzahl der zweiten Mobilstationen, wobei der erste Koordinierungsmetrikwert Information entspricht, die verwendet wird, um zu bestimmen, ob die mehreren Mobilstationen die Kanalgüteinformation per Rückkopplung senden;
   durch die Basisstation (100) erfolgenden Senden des ersten Koordinierungsmetrikwertes an die mehreren Mobilstationen; und
   durch die Mobilstation (200, 300) erfolgendes Bestimmen, ob die Kanalgüteinformation per Rückkopplung gesendet wird, durch Vergleichen des von der Basisstation empfangenen ersten Koordinierungsmetrikwertes $SM_{th}$ mit einem zweiten Koordinierungsmetrikwert $SM_i$ der Mobilstation.

6. Verfahren nach Anspruch 5, wobei bei dem Schritt des Berechnens einer Anzahl der ersten Mobilstationen die Anzahl der ersten Mobilstationen durch Zählen nur derjenigen von den mehreren Mobilstationen empfangenen Kanalgüteinformation berechnet wird, die ein Signal-Rausch-Verhältnis oberhalb eines vorbestimmten Schwellenwertes aufweist.

**7.** Verfahren nach Anspruch 5, wobei der Schritt des Steuerns des ersten Koordinierungsmetrikwertes umfasst:

Anheben (S206) des ersten Koordinierungsmetrikwertes, wenn die Anzahl der ersten Mobilstationen größer als die Anzahl der zweiten Mobilstationen ist; und
Absenken (S208) des ersten Koordinierungsmetrikwertes, wenn die Anzahl der ersten Mobilstationen kleiner als die Anzahl der zweiten Mobilstationen ist.

**8.** Verfahren nach Anspruch 5, wobei der Schritt des Bestimmens, ob die Kanalgüteinformation per Rückkopplung gesendet wird, umfasst:

Weglassen (S308) einer Rückkopplungssendung in Bezug auf die Kanalgüteinformation, wenn der erste Koordinierungsmetrikwert größer als der zweite Koordinierungsmetrikwert ist; und
per Rückkopplung erfolgendes Senden (S306) der Kanalgüteinformation, wenn der erste Koordinierungsmetrikwert kleiner als der zweite Koordinierungsmetrikwert ist.

## Revendications

**1.** Système destiné à effectuer une planification proportionnellement équitable (PF pour "Proportionally Fair"), incluant une station de base (100) effectuant la planification PF pour transmission de données par réception d'une information de qualité de voie (CQI pour "Channel Quality Information"), transmise en retour depuis plusieurs postes mobiles (200, 300) connectés à la station de base, le système étant **caractérisé :**

**en ce que** la station de base (100) est apte à déterminer un nombre $N_{CQI\,tar}$ de premiers postes mobiles délivrant en retour la CQI requise par la station de base, pour calculer un nombre $N_{CQI}$ de seconds postes mobiles, qui ont réellement transmis en retour la CQI, utilise la CQI reçue de la pluralité de postes mobiles, pour commander une première valeur de mesure de planification par comparaison (S204) du nombre de premiers postes mobiles avec le nombre de seconds postes mobiles, et pour transmettre la première valeur commandée de mesure de planification à la pluralité de postes mobiles, la première valeur de mesure de planification correspondant à l'information utilisée pour déterminer si la pluralité de postes mobiles a transmis en retour la CQI ; et
**en ce que** la pluralité de postes mobiles (200, 300) est apte à déterminer si les postes mobiles ont transmis la CQI en retour, par comparaison de la première valeur $SM_{th}$ de mesure de planification reçue de la station de base avec des secondes valeurs $SM_i$ de mesure de planification de la pluralité de postes mobiles.

**2.** Système selon la revendication 1, dans lequel la station de base (100) est apte à calculer le nombre de seconds postes mobiles (200, 300) en comptant seulement les CQI, qui sont reçues de la pluralité de postes mobiles, ayant un rapport signal sur brouillage excédant une valeur prédéterminée de seuil.

**3.** Système selon la revendication 1, dans lequel la station de base (100) est apte à commander la première valeur de mesure de planification en diminuant la première valeur de mesure de planification si le nombre des premiers postes mobiles est plus grand que le nombre des seconds postes mobiles et en augmentant la première valeur de mesure de planification si le nombre des premiers postes mobiles est plus petit que le nombre des seconds postes mobiles.

**4.** Système selon la revendication 1, dans lequel le poste mobile (200, 300) est apte à ne pas transmettre en retour la CQI à la station de base si la première valeur de mesure de planification est plus grande que la seconde valeur de mesure de planification et à transmettre en retour la CQI à la station de base si la première valeur de mesure de planification est plus petite que la seconde valeur de mesure de planification.

**5.** Procédé pour effectuer une planification proportionnellement équitable, PF, dans un système incluant une station de base (100) effectuant la planification PF pour transmission de données par réception d'une information de qualité de voie, CQI, transmise en retour depuis plusieurs postes mobiles (200, 300) connectés à la station de base, le procédé étant **caractérisé par** les étapes :

de détermination par la station de base d'un nombre $N_{CQI\,tar}$ de premiers postes mobiles qui transmettent en retour la CQI requise par la station de base ;
de calcul (S202) par la station de base d'un nombre $N_{CQI}$ de seconds postes mobiles, ayant réellement transmis en retour la CQI, en utilisant la CQI reçue de la pluralité de postes mobiles ;

de commande par la station de base (100) d'une première valeur de mesure de planification par comparaison (S204) du nombre de premiers postes mobiles avec le nombre des seconds postes mobiles, la première valeur de mesure de planification correspondant à l'information utilisée pour déterminer si la pluralité de postes mobiles a transmis la CQI en retour ;

de transmission par la station de base (100) de la première valeur de mesure de planification à la pluralité de postes mobiles ; et

de détermination par le poste mobile (200, 300) de ce que la CQI est, ou non, transmise en retour en comparant la première valeur $SM_{th}$ de mesure de planification reçue de la station de base avec une seconde valeur $SM_i$ de mesure de planification du poste mobile.

6. Procédé selon la revendication 5, dans lequel, à l'étape de calcul du nombre des premiers postes mobiles, le nombre des premiers postes mobiles est calculé en comptant seulement les CQI, qui sont reçues de la pluralité de postes mobiles, ayant un rapport signal sur brouillage excédant une valeur prédéterminée de seuil.

7. Procédé selon la revendication 5, dans lequel l'étape de commande de la première valeur de mesure de planification comprend :

l'augmentation (S206) de la première valeur de mesure de planification si le nombre des premiers postes mobiles est plus grand que le nombre des seconds postes mobiles ; et

la diminution (S208) de la première valeur de mesure de planification si le nombre des premiers postes mobiles est plus petit que le nombre des seconds postes mobiles.

8. Procédé selon la revendication 5, dans lequel l'étape de détermination de ce que la CQI est, ou non, transmise en retour comprend :

l'omission (S308) de la transmission en retour en ce qui concerne la CQI si la première valeur de mesure de planification est plus grande que la seconde valeur de mesure de planification ; et

la transmission en retour (S306) de la CQI si la première valeur de mesure de planification est plus petite que la seconde valeur de mesure de planification.

FIG.1

START

MEASURE $N_{CQI}$ ~S202

S204

$N_{CQI} > N_{CQI\_tar}$ ? ── NO

YES

INCREASE $SM_{th}$ ~S206

DECREASE $SM_{th}$ ~S208

END

FIG.2

START

CALCULATE SM$_i$ ~S302

S304

SM$_i$ > SM$_{th}$ ? — NO

YES

FEEDBACK TRANSMIT CQI ~S306

NO CQI FEEDBACK TRANSMISSION ~S308

END

FIG.3

FIG.4

FIG.5

FIG.6

FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LIN YANG et al.** Further Results on Selective Multiuser Diversity. *Int. Workshop on Modeling Analysis and Simulation of Wireless and Mobile Systems,* 04 October 2004